# EUROPEAN PATENT APPLICATION

(11) **EP 3 952 513 A1**
(43) Date of publication of application: **09.02.2022**
(21) Application number: 19923337.0
(22) Date of filing: 03.04.2019
(51) Int. Cl.: H04W 72/04, H04W 16/28, H04W 72/12

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); GUO, Shaozhen, Beijing 100190 (CN); WANG, Lihui, Beijing 100190 (CN); HOU, Xiaolin, Beijing 100190 (CN)
(74) Representative: Hoffmann Eitle
(86) International application number: PCT/JP2019/014887
(87) International publication number: WO 2020/202517

(57) **Abstract**

A user terminal according to an aspect of the present disclosure includes a control section that determines first spatial relation information (SRI) and second SRI for transmission of an uplink control channel using an identical resource, and a transmitting section that uses the identical resource to transmit the uplink control channel by employing the first SRI and to transmit the uplink control channel by employing the second SRI. According to an aspect of the present disclosure, appropriate SRI can be applied to a PUCCH.

## Description

### Technical Field

The present disclosure relates to a user terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel-15 NR, a user terminal (User Equipment (UE)) may be configured with spatial relation information (also referred to as SRI) related to a Physical Uplink Control Channel (PUCCH). In Rel-15 NR, control is performed such that one PUCCH SRI is in active for one PUCCH resource at a given time.

For NR, studies have been conducted about repeated transmission of a PUCCH by a UE to a plurality of transmission/reception points for the purpose of improving reliability of the PUCCH. The repeated transmission of the PUCCH may be referred to as PUCCH repetition.

However, current NR specifications prevent application of different pieces of SRI in the PUCCH repetitions, precluding reception quality of the PUCCH from being effectively improved. This may prevent, for example, achievement of spatial diversity gain, high rank transmission, and the like in a case where a plurality of transmission/reception points are used, and an increase in communication throughput may be suppressed.

Thus, an object of the present disclosure is to provide a user terminal and a radio communication method that can apply appropriate SRI to a PUCCH.

### Solution to Problem

A user terminal according to an aspect of the present disclosure includes a control section that determines first spatial relation information (SRI) and second SRI for transmission of an uplink control channel using an identical resource, and a transmitting section that uses the identical resource to transmit the uplink control channel by applying the first SRI and to transmit the uplink control channel by applying the second SRI. Advantageous Effects of Invention

According to an aspect of the present disclosure, appropriate SRI can be applied to a PUCCH.

### Brief Description of Drawings

FIG. 1 is a diagram to show a structure of PUCCH spatial relation activation/deactivation MAC CE in Rel-15 NR;
FIGS. 2A and 2B are diagrams to show an example of processing assumed for a multi TRP scenario;
FIG. 3 is a diagram to show an example of an SRI sequence according to a first embodiment;
FIG. 4 is a diagram to show another example of the SRI sequence according to the first embodiment;
FIG. 5 is a diagram to show an example of an SRI sequence according to Embodiment 2-1;
FIGS. 6A to 6D are diagrams to show examples of an SRI activation/deactivation MAC CE according to Embodiment 2-1;
FIGS. 7A to 7C are diagrams to show examples of an SRI activation/deactivation MAC CE according to Embodiment 2-2;
FIGS. 8A and 8B are diagrams to show examples of a correspondence relationship for SRI sequences according to Embodiment 3-1;
FIGS. 9A and 9B are diagrams to show examples of a correspondence relationship for SRI sequences according to Embodiment 3-2;
FIGS. 10A and 10B are diagrams to show examples of an SRI activation/deactivation MAC CE according to a fourth embodiment;
FIG. 11 is a diagram to show an example of a correspondence relationship for SRI sequences according to the fourth embodiment;
FIG. 12 is a diagram to show an example of specification of SRI according to Modified Example 1;
FIG. 13 is a diagram to show an example of a schematic structure of a radio communication system according to one embodiment;
FIG. 14 is a diagram to show an example of a structure of a base station according to one embodiment;
FIG. 15 is a diagram to show an example of a structure of a user terminal according to one embodiment; and
FIG. 16 is a diagram to show an example of a hardware structure of the base station and the user terminal according to one embodiment.

### Description of Embodiments

### (Spatial Relation Information)

In NR, UE controls transmission processing (at least one of, for example, transmission, mapping, precoding, modulation, and coding) for at least one of an uplink signal and an uplink channel (also expressed as signal/channel), based on a given spatial relation.

The spatial relation applied to a given signal/channel may be identified by spatial relation information (SRI) notified (configured) by using higher layer signaling.

Note that, in the present disclosure, the higher layer signaling may be any one or a combination of, for example, Radio Resource Control (RRC) signaling, Medium Access Control (MAC) signaling, broadcast information, and the like.

The MAC signaling may use, for example, a MAC control element (MAC CE), a MAC Protocol Data Unit y(PDU), or the like. The broadcast information may be, for example, a master information block (MIB), a system information block (SIB), minimum system information (Remaining Minimum System Information (RMSI)), other system information (OSI), or the like.

For example, in Rel-15 NR, spatial relation information ("PUCCH-SpatialRelationInfo" information element for RRC) regarding the spatial relation between a given reference signal (RS) and an uplink control channel (Physical Uplink Control Channel (PUCCH)) may be included in PUCCH configuration information ("PUCCH-Config" information element for RRC) to be configured for the UE.

The given RS may be at least one of a synchronization signal block (SSB), a channel state information-reference signal (CSI-RS), and a reference signal for measurement (Sounding Reference Signal (SRS)).

The SRI configured may include an SRI identifier (ID) for identifying SRI. The SRI may include, as an index for the given RS, at least one of an SSB index, a CSI-RS resource ID, and an SRS resource ID. The spatial relation information may include a serving cell index, a bandwidth part (BWP) ID, and so on that correspond to the given RS.

Note that in the present disclosure, an index, an ID, an indicator, a resource ID, and so on may be interchangeably interpreted.

In a case where the spatial relation information related to an SSB or CSI-RS and the PUCCH is configured for the UE, the PUCCH may be transmitted by using a spatial domain filter identical to a spatial domain filter for reception of the SSB or CSI-RS. In other words, in this case, the UE may assume that a UE reception beam for the SSB or CSI-RS is identical to a UE transmission beam for the PUCCH.

In a case where the spatial relation information related to an SRS and the PUCCH is configured for the UE, the UE may transmit the PUCCH by using a spatial domain filter identical to a spatial domain filter for transmission of the SRS. In other words, in this case, the UE may assume that a UE transmission beam for the SRS is identical to a UE transmission beam for the PUCCH.

Note that a spatial domain filter for transmission from a base station, a downlink spatial domain transmission filter, and a transmission beam of the base station may be interchangeably interpreted. Note that a spatial domain filter for reception of the base station, an uplink spatial domain receive filter, and a receive beam from the base station may be interchangeably interpreted.

A spatial domain filter for transmission of the UE, an uplink spatial domain transmission filter, and a transmission beam of the UE may be interchangeably interpreted. A spatial domain filter for reception of the UE, a downlink spatial domain receive filter, and a receive beam of the UE may be interchangeably interpreted.

The UE may be configured with SRI in a unit of PUCCH configuration (PUCCH-Config). The SRI configured by the PUCCH configuration may be applied to all PUCCH resources configured by the PUCCH configuration.

In a case where more than one piece of SRI related to the PUCCH is configured for the UE, the UE may perform control such that at a given time, one piece of PUCCH SRI is activated for one PUCCH resource, based on a PUCCH spatial relation activation/deactivation MAC CE.

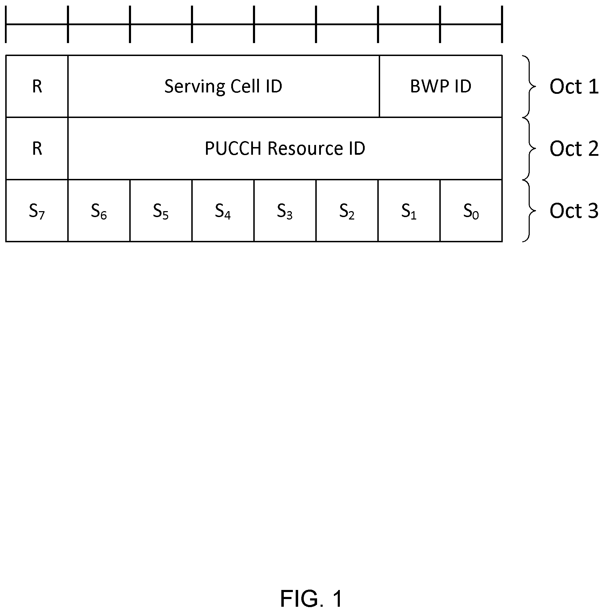

FIG. 1 is a diagram to show a structure of the PUCCH spatial relation activation/deactivation MAC CE in Rel-15 NR. FIG. 1 shows a bit sequence constituting the MAC CE and is expressed in a total of three octets (8 bits x 3 = 24 bits) of illustrated octets (Octet, Oct) 1 to 3.

The MAC CE may include information such as a serving cell ID ("Serving Cell ID" field), a BWP ID ("BWP ID" field), a PUCCH resource ID ("PUCCH Resource ID" field) for an application target.

The MAC CE includes a field for Sᵢ (i = 0 to 7). In a case where a field for a given Sᵢ indicates 1, the UE activates SRI with SRI ID #i. In a case where the field for the given Sᵢ indicates 0, the UE deactivates the SRI with the SRI ID #i.

Note that an R field shown in FIG. 1 may mean a reserved bit for future expansion.

### (Multi TRP)

For NR, studies have been conducted about UL transmission (e.g., PUCCH transmission) from the UE to one or a plurality of transmission/reception points (TRPs) (multi TRP).

As an example, studies have been conducted about repeated transmission of the PUCCH applying different pieces of SRI for multi TRP for the purpose of improving reliability of the PUCCH for use cases (or services) for ultra reliable and low latency (for example, Ultra Reliable and Low Latency Communications (URLLC)). The repeated transmission of the PUCCH may be referred to as PUCCH repetition.

Note that the SRI may correspond to a beam. For example, the UE may assume that PUCCHs with different pieces of SRI are transmitted by using different beams.

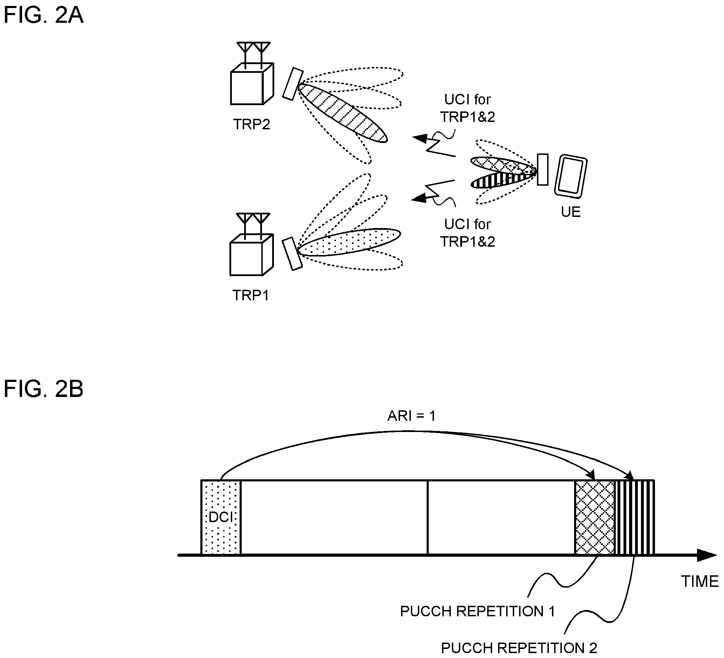

FIGS. 2A and 2B are diagrams to show an example of processing assumed for a multi TRP scenario. In these examples, each TRP and the UE are assumed to be capable of transmitting (or receiving or forming) four different beams, but no such limitation is intended.

FIG. 2A shows an example in which the UE repeatedly transmits identical uplink control information (UCI) to two TRPs (TRP 1 and TRP 2) by using different beams.

FIG. 2B is a diagram to show an example of a timeline for processing in FIG. 2A. In the present example, for the UE, reception of a downlink shared channel (Physical Downlink Shared Channel (PDSCH)) from TRP 1 and TRP 2 (omitted in the drawings) is scheduled by DCI. The DCI includes an ACK/NACK resource indicator (ARI) = 1.

Note that the DCI may be notified from one TRP (single PDCCH) or from each TRP (multi PDCCH). PDSCHs transmitted from a plurality of TRPs may be referred to as multi PDSCH.

The ARI corresponds to information specifying a resource used to transmit the HARQ-ACK corresponding to the PDSCH, and may be referred to as a PUCCH resource indicator. The value of the ARI in FIG. 2B is only illustrative and any other value may be specified.

Based on the ARI, the UE repeatedly transmits delivery confirmation information (for example, Hybrid Automatic Repeat reQuest ACKnowledgement (HARQ-ACK)) corresponding to the multi PDSCH by using an identical PUCCH resource (for example, an identical frequency resource, an identical time resource (an identical symbol in different slots, or the like).

According to the multi TRP scenario shown in FIGS. 2A and 2B, the reception quality of the PUCCH can be improved. However, as described above, the current Rel-15 NR can activate only one piece of SRI for a given PUCCH resource at the same time. In other words, during PUCCH repetitions, an identical piece of SRI is used.

Consequently, the current NR specifications prevent application of different pieces of SRI in the PUCCH repetitions, precluding reception quality of the PUCCH from being effectively improved. This may prevent achievement of spatial diversity gain, high rank transmission, and the like in a case where the multi TRP is used, and an increase in communication throughput may be suppressed.

In view of this, the inventors of the present invention can up with an SRI configuration (or specification) method allowing the reception quality of the PUCCH to be improved even in a case where the PUCCH repetition is employed. According to an aspect of the present invention, appropriate SRI can be applied to the

### PUCCH.

Embodiments according to the present disclosure will be described in detail with reference to the drawings as follows.

The radio communication methods according to respective embodiments may each be employed individually, or may be employed in combination.

Note that, in the present disclosure, a panel, an Uplink (UL) transmission entity, a TRP, a demodulation reference signal (DMRS) port, a DMRS port group, a code division multiplexing (CDM) group, a PDSCH, a codeword, a base station, and the like may be interchangeably interpreted.

The HARQ-ACK in the embodiments described below may be interpreted as uplink control information (UCI). In other words, the HARQ-ACK may be interchangeably interpreted with any one or a combination of HARQ-ACK, channel state information (CSI), a scheduling request (SR), and so on.

### (Radio Communication Method)

### <First Embodiment>

In a first embodiment, for the UE, SRI in units of PUCCH repetitions are configured in the form of an SRI sequence over PUCCH repetitions by RRC signaling.

Note in the present disclosure, the SRI may be interchangeably interpreted with spatial relation information (SRI) for the PUCCH, an RRC parameter "Spatialrelationinfo", an SRI ID, and the like. In the present disclosure, the SRI sequence may be interchangeably interpreted with a sequence of SRI applied to the PUCCH repetitions, a set of SRI, a pattern of SRI, and so on.

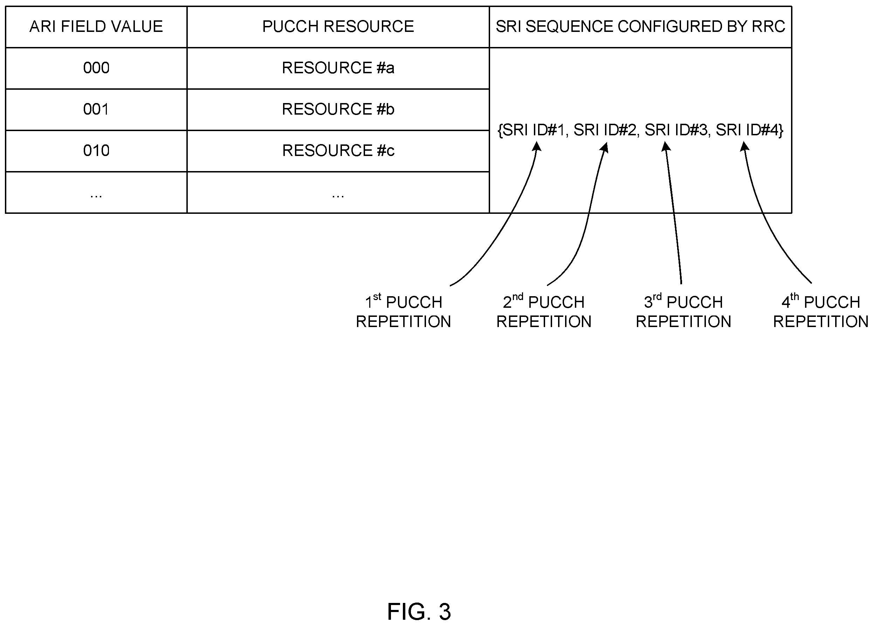

FIG. 3 is a diagram to show an example of an SRI sequence according to the first embodiment. The present example shows values of the ARI field included in the DCI, and PUCCH resources and SRI sequences corresponding to the values.

In FIG. 3, different PUCCH resources are specified according to the value of the ARI field. For example, the values of the ARI field = 000, 001, and 010 correspond to PUCCH resources #a, #b, and #c. On the other hand, FIG. 3 indicates that regardless of the value of the ARI field, an identical SRI sequence configured by RRC signaling is utilized.

The SRI sequence in FIG. 3 corresponds to {#1, #2, #3, #4}. Note that in the present disclosure, SRI ID #x is also simply referred to as #x for simplification. The SRI sequence may mean that the first, second, third, and fourth transmissions in the PUCCH repetitions respectively correspond to #1, #2, #3, and #4. Thus, the SRI sequence may indicate SRI applied to each of the PUCCH repetitions.

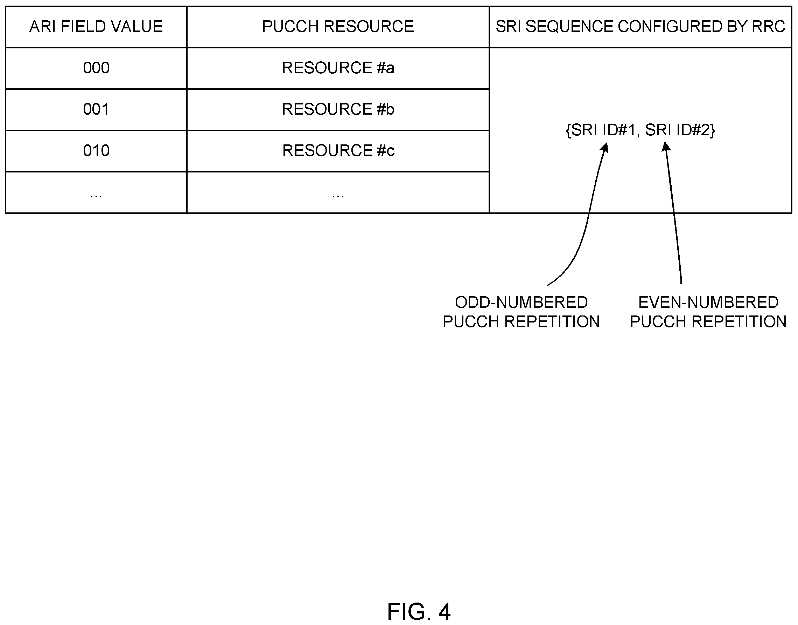

On the other hand, the SRI sequence may collectively express several repetitions. FIG. 4 is a diagram to show another example of an SRI sequence according to the first embodiment. The present example is similar to the example in FIG. 3 except for the SRI sequence, and thus, description will not be repeated.

The SRI sequence in FIG. 4 corresponds to {#1 #2}. For example, the SRI sequence may mean that the odd- and even-numbered transmissions in the PUCCH repetitions respectively correspond to #1 and #2. In a case where transmission is repeated four times, the SRI sequence may mean that the first and third transmissions in the repetitions correspond to #1, whereas the second and fourth transmissions in the repetitions correspond to #2. Note that the meaning of the SRI sequence is not limited to this but that the SRI sequence may mean a format like {multiple-of-n-th repetition, multiple-of-n-th + 1 repetition, ...} (n > 1).

According to the first embodiment described above, the repeated transmissions of PUCCH can be executed based on the SRI sequence.

### <Second Embodiment>

In a second embodiment, for the UE, SRI in units of PUCCH repetitions is configured by a combination of RRC signaling and MAC CE.

The second embodiment is broadly classified into Embodiment 2-1 in which one or a plurality of SRI sequences are configured for the UE and Embodiment 2-2 in which a plurality of pieces of SRI are configured for the UE as is the case with Rel-15 NR.

### [Embodiment 2-1]

For the UE, a given number of (for example, M) SRI sequences may be configured by RRC signaling. In this regard, the given number M may be, for example, 8, 64, or the like, or larger than 64.

The SRI sequence may be configured in association with a given ID (which may also be referred to as an SRI sequence ID and so on) for identifying (determining) the SRI sequence.

For the UE, one of M SRI sequences configured may be activated by the MAC CE. The MAC CE may specify an SRI sequence ID to be activated.

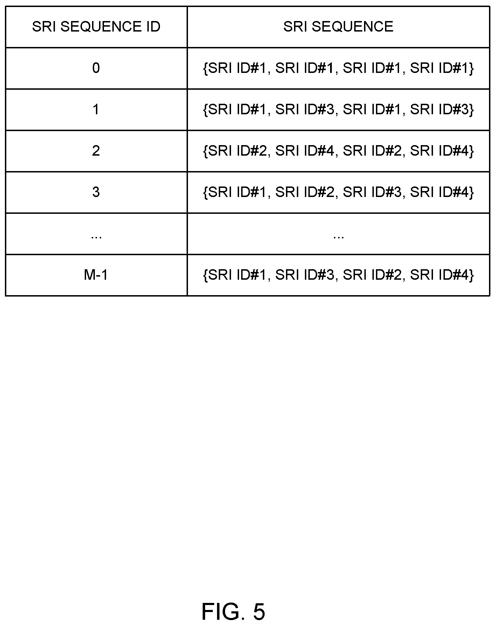

FIG. 5 is a diagram to show an example of an SRI sequence according to Embodiment 2-1. The present example shows SRI sequence IDs and corresponding SRI sequences. The present example shows an SRI sequence corresponding to PUCCH repetitions with the number of repetition being 4, but no such limitation is intended.

FIG. 5 shows M SRI sequences configured. As is the case with SRI sequences corresponding to an SRI sequence ID = 0, an identical SRI ID (here, SRI ID #1) may be used over the PUCCH repetitions.

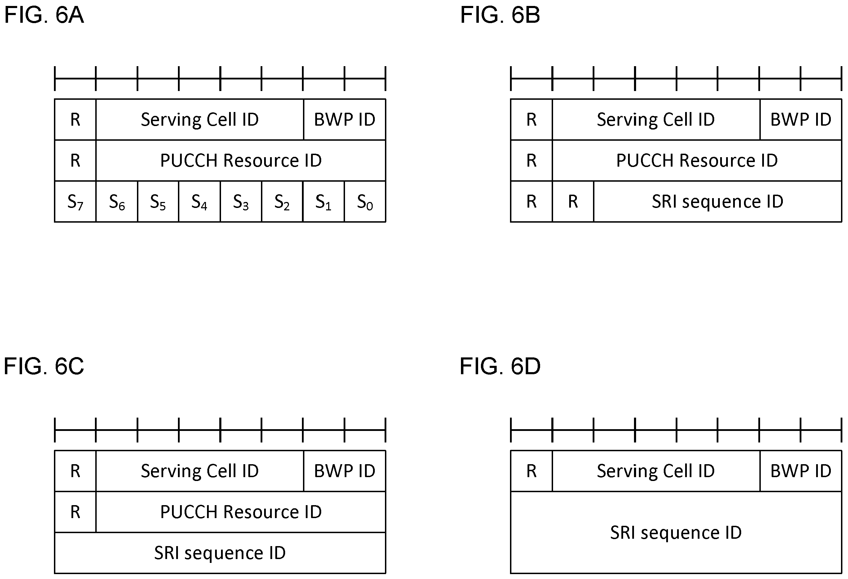

FIGS. 6A to 6D are diagrams to show examples of an SRI activation/deactivation MAC CE according to Embodiment 2-1. The MAC CE in FIG. 6A includes a structure substantially identical to the structure of an existing PUCCH SRI activation/deactivation MAC CE in Rel-15 NR, but differs in the meaning of the field for Sᵢ from the existing PUCCH SRI activation/deactivation MAC CE in Rel-15 NR.

The existing field for Sᵢ indicates that PUCCH SRI with the SRI ID #i is to be activated/deactivated. However, the field for Sᵢ in FIG. 6A indicates that the SRI sequence with the SRI sequence ID #i is to be activated/deactivated (for example, Sᵢ = 1 indicates activation, and Sᵢ = 0 indicates deactivation).

Note that FIG. 6A indicates an example of M = 8 but that for M of another value, the number of fields for Sᵢ may be increased or reduced.

The MAC CE in FIG. 6B includes a structure substantially identical to the structure of the MAC CE in FIG. 6A but differs in that the MAC CE in FIG. 6B includes the field of the SRI sequence ID.

The field of the SRI sequence ID in FIG. 6B may indicate an SRI sequence ID used over the PUCCH repetitions using a PUCCH resource corresponding to the PUCCH resource ID field of the MAC CE. M that is relatively large (for example, M = 64) enables a suitable reduction in the number of bits in the MAC CE shown in the present example.

The MAC CE in FIG. 6C includes a structure substantially identical to the structure of the MAC CE in FIG. 6B but differs from the MAC CE in FIG. 6B in that reserved bits are slightly reduced and that the field size of the SRI sequence ID is increased from 6 bits to 8 bits.

In the field of the SRI sequence ID in FIG. 6C, an ID ranging from 0 to 255 can be specified. M that is relatively large (for example, M = 256) enables a suitable reduction in the number of bits in the MAC CE shown in the present example.

The MAC CE in FIG. 6D includes a structure substantially identical to the structure of the MAC CE in FIG. 6C but differs from the MAC CE in FIG. 6C in that the PUCCH resource ID field is eliminated and that the field size of the SRI sequence ID is increased to 16 bits.

In the field of the SRI sequence ID in FIG. 6D, an ID corresponding to M > 256 can be specified. M that is very large (for example, M > 256) enables a suitable reduction in the number of bits in the MAC CE shown in the present example.

The UE may assume the structure of the SRI activation/deactivation MAC CE, based on the number M of SRI sequence IDs configured, under at least one of the following conditions:
- in a case where M is a value included in a first range (for example, M ≤ 8), the MAC CE corresponds to the structure in FIG. 6A,
- in a case where M is a value included in a second range (for example, 8 < M ≤ 64), the MAC CE corresponds to the structure in FIG. 6B,
- in a case where M is a value included in a third range (for example, 64 < M ≤ 256), the MAC CE corresponds to the structure in FIG. 6C, and
- in a case where M is a value included in a fourth range (for example, 256 < M), the MAC CE corresponds to the structure in FIG. 6D.

In this regard, the first, second, third, and fourth ranges may be configured by higher layer signaling or defined by specifications.

Note that in response to reception of such a MAC CE as shown in FIGS. 6B to 6D, the UE may deactivate the SRI sequence ID specified by the MAC CE in a case where the SRI sequence ID is already active. In a case where the SRI sequence ID specified by the MAC CE is not active and another SRI sequence ID is already active, such another SRI sequence ID may be deactivated and the SRI sequence ID specified may be activated.

The UE may assume that such a MAC CE as shown in FIGS. 6B to 6D includes information indicating activation or deactivation of the SRI sequence ID (for example, this may be indicated by one or more R fields). Based on the information, the UE may control activation/deactivation of the SRI sequence ID specified.

Note that the PUCCH resource ID field is included in the MAC CE as shown in FIGS. 6A to 6C, the UE may assume that the SRI sequence is activated/deactivated in units of PUCCH resources. In a case where the PUCCH resource ID field is not included in the MAC CE as shown in FIG. 6D, the UE may assume common activation/deactivation of the SRI sequence over a plurality of PUCCH resources (in other words, in units of BWPs, units of cells, or the like). This also applies to the other embodiments.

### [Embodiment 2-2]

In Embodiment 2-2, no SRI sequences are configured for the UE. On the other hand, for the UE, a given number of (for example, M) SRIs may be configured by RRC signaling. In this regard, the given number M may be, for example, 8, 64, or the like, or larger than 64.

For the UE, one or a plurality of SRIs out of M configured SRIs may be activated by the MAC CE.

In Embodiment 2-2-1, for the UE, one MAC CE collectively specifies SRI IDs for each PUCCH repetition. In Embodiment 2-2-2, for the UE, one MAC CE specifies an SRI ID for a specific single transmission in the PUCCH repetitions.

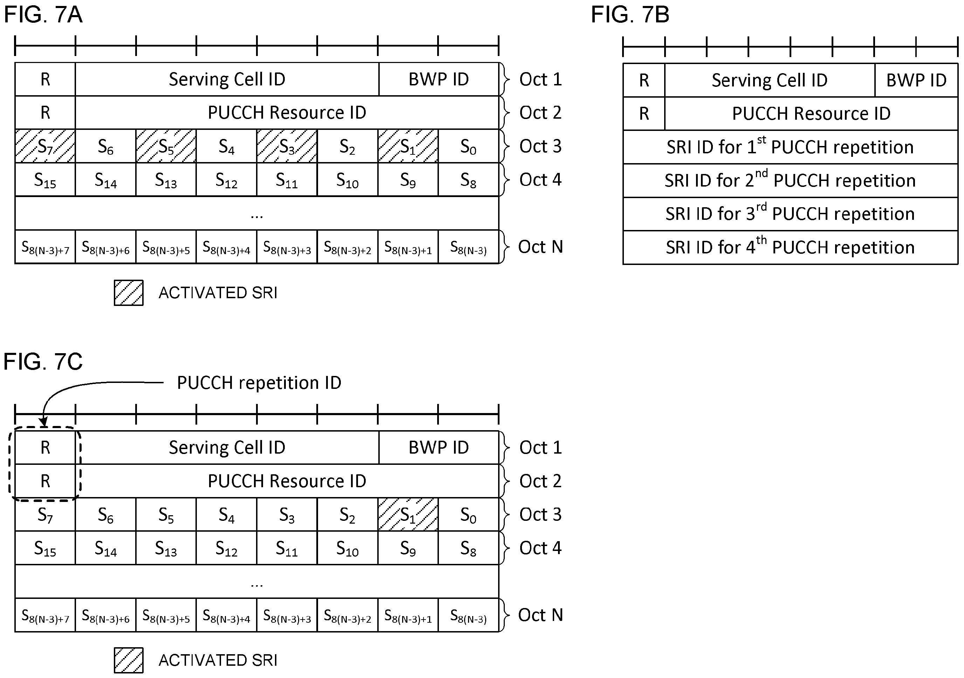

FIGS. 7A to 7C are diagrams to show examples of an SRI activation/deactivation MAC CE according to Embodiment 2-2.

FIG. 7A is a diagram to show an example of the MAC CE according to Embodiment 2-2-1. FIG. 7A may be constituted of N octets instead of three octets as in the existing MAC CE in FIG. 1. In this case, the MAC CE may include 8(N - 2) fields for Sᵢ, the number corresponding to a value from i = 0 to 8(N - 3) + 7. Note that the MAC CE may be structured in which, for example, 8(N - 3) + 7 = M - 1.

Unlike the existing MAC CE in FIG. 1, values of a plurality of Sᵢ may be 1 in the MAC CE in FIG. 7A. In the present example, four Sᵢs of S₁, S₃, S₅, and S₇ have a value of 1. A plurality of SRIs corresponding to the value of Sᵢ having a value of 1 may each be applied to any of the repetitions. Based on a given rule, the UE may determine which SRI ID #i is to be applied to which of the repetitions in the sequence.

For example, the UE may assume that activated SRI IDs correspond in ascending order or descending order to the respective repetitions. Specifically, the UE may assume that when the activated SRI IDs are arranged in ascending or descending order and the repetitions are arranged in ascending or descending order, the activated SRI IDs correspond to the repetitions in ascending order on a one-to-one basis. In a case in FIG. 7A, the UE may apply the SRI ID #1 to the 1^{st} PUCCH repetition, apply the ID #3 to the 2^{nd} repetition, apply the ID #5 to the 3^{rd} repetition, and apply the ID #7 to the 4^{th} repetition.

Unlike the MAC CE in FIG. 7A, the MAC CE in FIG. 7B includes a field directly indicating the value of an SRI ID to be activated. The present example shows 8 bits of four SRI ID fields respectively applied to the 1^{st}, 2^{nd}, 3^{rd}, and 4^{th} repetitions. Note that FIG. 7B shows an example with the number of repetitions = 4 but that in a case where the number of repetitions is another value, the number of SRI ID fields may be increased or reduced. The UE may identify the size of the MAC CE, based on a configured or specified number of PUCCH repetitions.

For the MAC CE in FIG. 7C, the UE may assume that only one Sᵢ may have a value specified to be 1 as is the case with the existing MAC CE in FIG. 1. On the other hand, the MAC CE in FIG. 7C may include a field for identifying a target to which the SRI ID is to be applied (for example, which transmission in the sequence of transmissions in the PUCCH repetitions). The field may be referred to as a PUCCH repetition ID field. FIG. 7C shows an example in which two R fields in Oct 1 and Oct 2 are used as PUCCH repetition ID fields, but the structure of the fields is not limited to this.

The UE may assume that the SRI ID #i specified for Sᵢ = 1 is applied to the x^{th} repetition corresponding to the value of the PUCCH repetition ID field.

For the MAC CE in FIG. 7C, for example, one or a plurality of MAC CEs may be included in one MAC PDU. The use of the MAC CE in FIG. 7C allows the SRI to be individually adjusted in repetition units.

According to the second embodiment described above, the PUCCH repetitions can be executed by activating the SRI in repetition units. For example, control can be performed such that different pieces of SRI are used for the respective PUCCH resources and for the respective PUCCH repetitions.

### <Third Embodiment>

In a third embodiment, for the UE, SRI in units of PUCCH repetitions is configured by a combination of RRC signaling and DCI.

In the third embodiment, for the UE, a given number (for example, M) of SRI sequences may be configured by RRC signaling. In this regard, the given number M may be, for example, 8, 64, or the like, or larger than 64. For example, M SRI sequences may be configured as shown in FIG. 5.

The third embodiment is broadly classified into Embodiment 3-1 in which the SRI field in the DCI is used to specify one sequence for the UE and Embodiment 3-2 in which another field in the DCI is at least used to specify one sequence for the UE.

### [Embodiment 3-1]

In Embodiment 3-1, the UE identifies the SRI sequence, based on the SRI field in the DCI (for example, DCI format 1_1). The SRI field may be a field for identifying an SRI sequence employed for PUCCH repetitions, and may be referred to as an SRI sequence field.

The number of bits of the SRI field may vary according to the number M of SRI sequences configured. For example, the number of bits of the SRI field may be three bits for M = 8 or six bits for M = 64.

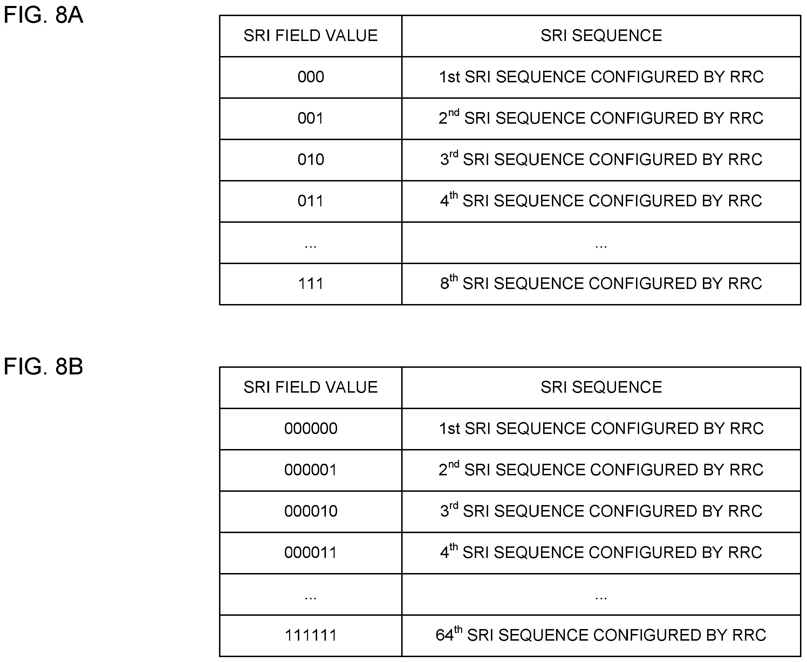

FIGS. 8A and 8B are diagrams to show examples of a correspondence relationship for SRI sequences according to Embodiment 3-1. The present example shows SRI field values included in the DCI and corresponding SRI sequences. FIG. 8A shows an example of the SRI field of three bits, and FIG. 8B shows an example of the SRI field of six bits.

In FIGS. 8A and 8B, different SRI sequences are specified according to the SRI field value. For example, in FIG. 8A, the SRI field values = 000, 001, and 010 are respectively associated with first, second, and third SRI sequences configured by RRC. The first, second, and third SRI sequences may correspond to SRI sequence IDs #0, #1, and #2 in the example of FIG. 5.

According to the structure of Embodiment 3-1, the dedicated SRI field is included in the DCI, allowing the SRI sequence to be easily identified.

### [Embodiment 3-2]

In Embodiment 3-2, the UE identifies the SRI sequence based at least on another field (for example, ARI field) in the DCI (for example, DCI format 1_1) other than the SRI field.

Note that in Embodiment 3-2, the UE may identify the SRI sequence, based on the SRI field and another field. Whether to use the SRI field may vary according to the number M of SRI sequences configured. For example, the UE assumes that the SRI field is absence when M = 8, and SRI field is three bits or may be three bits when M = 64.

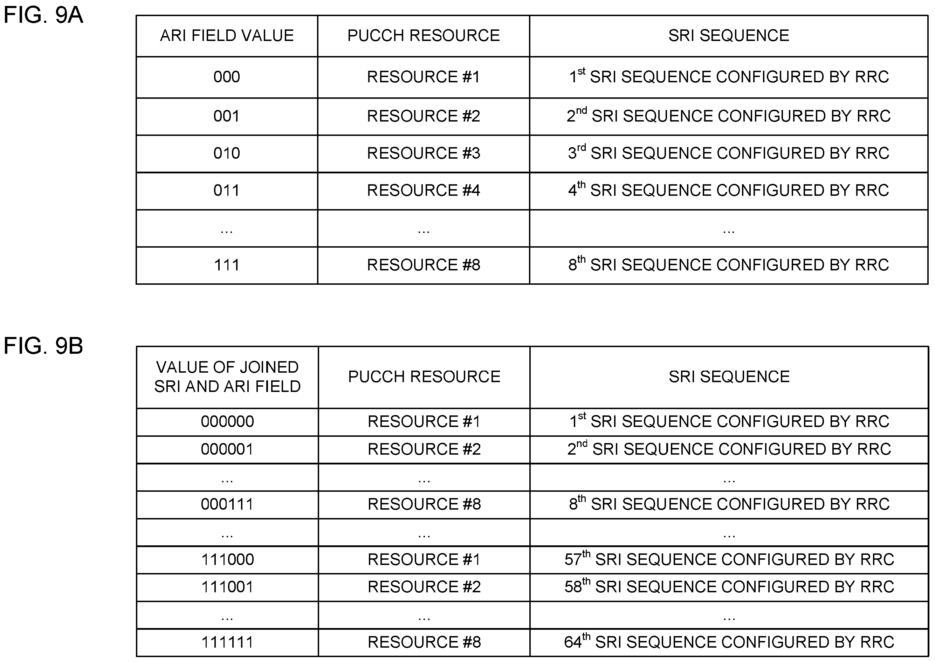

FIGS. 9A and 9B are diagrams to show examples of a correspondence relationship for SRI sequences according to Embodiment 3-2. FIG. 9A shows an example of M = 8, and FIG. 9B shows an example of M = 64.

As shown in FIG. 9A, in a case where the number of SRI sequences configured can be expressed by a given field (for example, in the present example, the ARI field of three bits), the given field may exclusively be used to specify the SRI sequence as well as PUCCH resources. For example, in FIG. 9A, in response to being notified of the value of the ARI field = 000, the UE may determine that the first SRI sequence configured by RRC is to be applied to the PUCCH repetitions using PUCCH resource #1.

As shown in FIG. 9B, in a case where the number of SRI sequences configured fails to be expressed by a given field (for example, in the present example, the ARI field of three bits), the given field and the SRI field may be used to specify the SRI sequence. The PUCCH resource may be specified by the ARI field.

In the present example, one of M SRI sequences can be specified by the value of a bit sequence of six bits obtained by combining (joining) the SRI field and the ARI field. In the joint bit sequence, the ARI field may be used as least significant bits (LSBs) or most significant bits (MSBs) (in FIG. 9B, LSBs).

According to the structure of Embodiment 3-2, the SRI field can be included in the DCI exclusively when needed, allowing suppression of an increase in the amount of information used to identify the SRI sequence.

According to the third embodiment described above, the PUCCH repetitions can be executed with the SRI sequence dynamically varied. For example, control can be performed such that different pieces of SRI are used for an identical PUCCH resource and for the respective PUCCH repetitions.

### <Fourth Embodiment>

In a fourth embodiment, for the UE, SRI in units of PUCCH repetitions is configured by a combination of RRC signaling, MAC CE, and DCI.

In the fourth embodiment, for the UE, a given number (for example, M) of SRI sequences may be configured by RRC signaling. In this regard, the given number M may be, for example, 8, 64, or the like, or larger than 64. For example, M SRI sequences may be configured as shown in FIG. 5.

In the fourth embodiment, in a case where a plurality of SRI sequences are configured, one or a plurality of SRI sequences (subset of SRI sequences) are further activated by using the MAC CE. The maximum number of active SRI sequences may be limited to a given number (for example, eight).

In the fourth embodiment, a given field in the DCI may be used to specify, for the UE, one of the activated SRI sequences. Note that the given field as used here may be the SRI field as described in the third embodiment or may be expressed by a combination of the SRI field and another field.

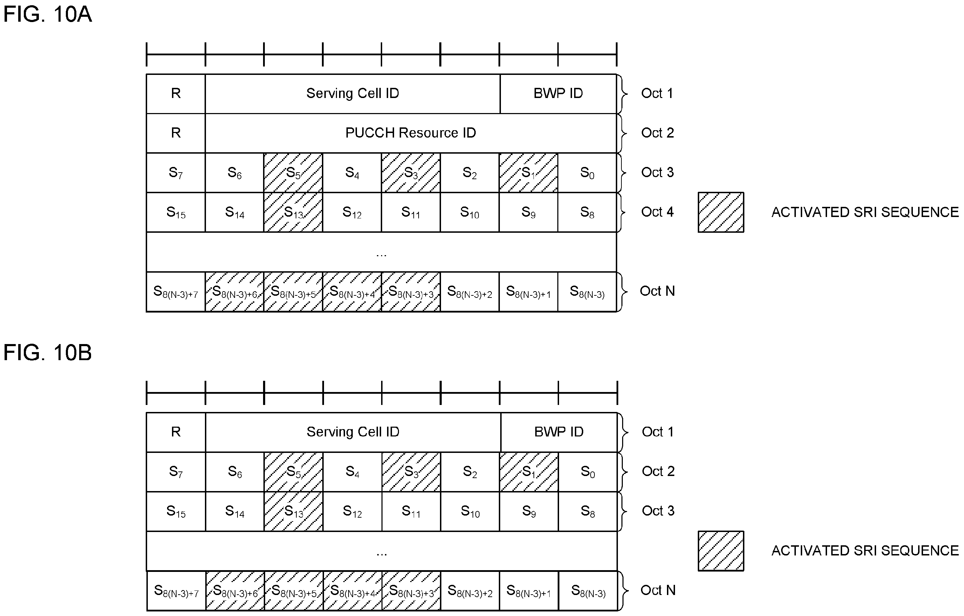

FIGS. 10A and 10B are diagrams to show examples of an SRI activation/deactivation MAC CE according to the fourth embodiment. The MAC CE in FIG. 10A may correspond to the MAC CE in FIG. 6A illustrated in Embodiment 2-1 and including an increased number of Sᵢ fields. The MAC CE in FIG. 10B corresponds to the MAC CE in FIG. 10A from which the PUCCH resource ID field has been removed.

The fields for Sᵢ in FIG. 10A indicate that the SRI sequence with the SRI sequence ID #i is to be activated/deactivated (for example, Sᵢ = 1 indicates activation, and Sᵢ = 0 indicates deactivation). In FIG. 10A, a total of eight SRI sequence IDs of S₁, S₃, S₅, S₁₃, S_{8(N-3)+3}, S_{8(N-3)+4}, S_{8(N-3)+5}, and S_{8(N-3)+6} are activated. In this manner, for a given PUCCH resource, a plurality of SRI sequence IDs may be simultaneously active.

Note that as already described, in a case where the PUCCH resource ID field is included in the MAC CE as shown in FIG. 10A, the UE may assume that the SRI sequence is activated/deactivated in units of PUCCH resources. In a case where the PUCCH resource ID field is not included in the MAC CE as shown in FIG. 10B, the UE may assume common activation/deactivation of the SRI sequence over a plurality of PUCCH resources (in other words, in units of BWPs, units of cells, or the like).

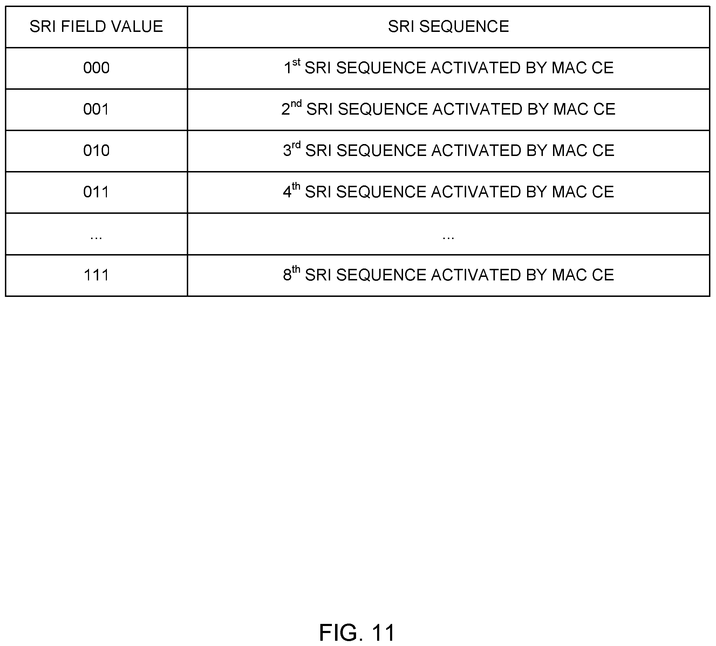

FIG. 11 is a diagram to show an example of a correspondence relationship for SRI sequences according to the fourth embodiment. The present example shows SRI field values included in the DCI and corresponding SRI sequences. FIG. 11 shows an example of the SRI field of three bits.

In FIG. 11, different SRI sequences are specified according to the SRI field value. The UE may assume that the SRI sequence IDs activated by the above-described MAC CE correspond in ascending order or descending order to the respective SRI field values. Specifically, the UE may assume that when the activated SRI IDs are arranged in ascending or descending order and the SRI field values are arranged in ascending or descending order, the activated SRI IDs correspond to the SRI field values in ascending order on a one-to-one basis.

With the case in FIG. 10A (or 10B) assumed, active SRI sequence IDs corresponding to the SRI field values may be identified, such as the SRI sequence ID #1 being determined to correspond to the first SRI sequence in FIG. 11, the SRI sequence ID #3 being determined to correspond to the second SRI sequence, ...

According to the fourth embodiment described above, the PUCCH repetitions can be executed with the SRI sequence dynamically varied. For example, control can be performed such that different pieces of SRI are used for the respective PUCCH resources and for the respective PUCCH repetitions.

### (Modified Example 1)

In Modified Example 1, a case is assumed in which the HARQ-ACKs for one or more PDSCHs are transmitted on an identical PUCCH, based on one HARQ-ACK codebook.

In this case, the SRI or the SRI sequence applied to the above-described PUCCH may be dynamically specified by a given field (for example, a transmit power control (TPC) command field) included in specific DCI (for example, the last (latest) DCI or the first (earliest) DCI), out of the DCI for scheduling the above-described one or more PDSCHs.

In other words, the DCI described above in the third and fourth embodiments and the like may be the specific piece of the DCI, and the TPC command field in the specific piece of the DCI may be used as "another field" specifying the SRI.

The given field (for example, the TPC command field) included in a given DCI (for example, the first DCI or the last DCI) that is not the above-described specific DCI, out of the DCI for scheduling the above-described one or more PDSCHs may be used for control of the PUCCH. For example, the UE may control transmission power for the PUCCH, based on the TPC command field included in the given piece of the DCI that is not the above-described specific DCI.

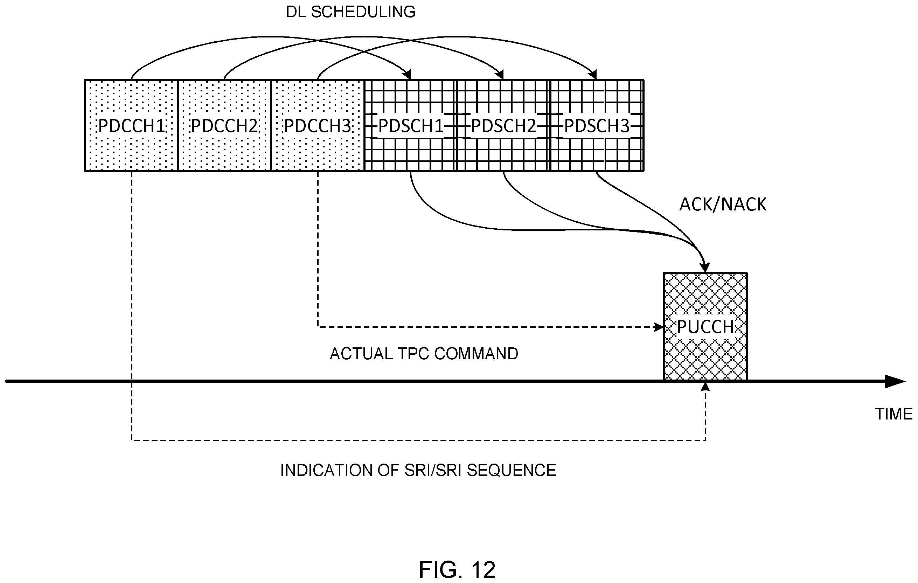

FIG. 12 is a diagram to show an example of specification of the SRI according to Modified Example 1. In the present example, PDCCHs 1, 2, and 3 respectively DL schedule PDSCHs 1, 2, and 3. The UE is specified to transmit the HARQ-ACKs for PDSCHs 1, 2, and 3 by using an illustrated PUCCH resource.

In the example in FIG. 12, the UE may assume, as the SRI or SRI sequence field, the TPC command field included in the first DCI (PDCCH 1) of the DCI for scheduling PDSCHs 1 to 3 associated with the HARQ-ACKs transmitted on the identical PUCCH. The UE may determine the SRI or the SRI sequence applied to the PUCCH, based on the TPC command field.

On the other hand, the UE may assume that the TPC command field included in the last DCI (PDCCH 3) of the DCI for scheduling PDSCHs 1 to 3 is used to specify an actual TPC command. The UE may determine the transmission power applied to the PUCCH, based on the TPC command field.

Note the first DCI may be interpreted as the i^{th} DCI from the beginning and that the last DCI may be interpreted as the j^{th} DCI from the end.

### (Modified Example 2)

In the case described in Modified Example 1, instead of the TPC command field in the specific DCI, a PUCCH resource indicator (hereinafter also referred to as the PRI) field in the specific DCI may be used to determine the SRI or the SRI sequence.

In other words, in a case where the HARQ-ARKs for one or more PDSCHs are transmitted on an identical PUCCH, based on one HARQ-ACK codebook, the SRI or the SRI sequence applied to the PUCCH may be dynamically specified by the PRI field in a specific DCI out of DCI for scheduling the above-described one or more PDSCHs. The UE may control a resource for the PUCCH, based on the PRI field included in a given DCI that is not the above-described specific DCI.

Note that Modified Example 1 is more preferable than Modified Example 2. This is because the behavior of the UE is securer when the interpretation of the TPC command field varies depending on the position of the received DCI than when the interpretation of the PUCCH resource indicator field varies depending on the position of the received DCI. Specifically, a failure in detection of DCI by the UE may vary the PUCCH resource, possibly hindering the base station from detecting a PUCCH resource.

For example, PDCCHs 1, 2, and 3 shown in FIG. 11 are assumed to include PRIs 1, 2, and 3. In a case where PRIs 1, 2, and 3 have an identical value, the HARQ-ACK can be transmitted on the identical PUCCH resource, based on PRI 2 of PDCCH 2 even in a case where the UE fails to detect the DCI in PDCCH 3.

On the other hand, in a case where the values of PRIs 1, 2, and 3 correspond to separate PUCCH resources 1, 2, and 3, a failure in detection of DCI in PDCCH 3 by the UE leads to transmission of the HARQ-ACK on PUCCH resource 2 instead of PUCCH resource 3. To deal with such a situation, the base station may attempt decoding on the assumption that HARQ-ACKs are transmitted on PUCCH resources with PRIs specified by a plurality of pieces corresponding to the identical PUCCH.

### <Others>

In the above-described embodiments, the case has been described in which a plurality of pieces of SRI are used for PUCCH repetitions, but the scope of application of the present disclosure is not limited to this. For example, to specify (or configure or activate) SRI for normal PUCCH transmission not applying PUCCH repetitions, the methods in the above-described embodiments may be utilized. In that case, the PUCCH repetitions may be interpreted as PUCCHs, the SRI sequence may be interpreted as SRI, and the SRI sequence ID may be interpreted as the SRI ID.

The above-described embodiments may be employed in a case where the multi TRP is not used (in a case of single TRP).

In the present disclosure, the example has been described in which UCI (HARQ-ACK) is transmitted by using the PUCCH, but the present disclosure is not limited to this. The contents of the present disclosure are applicable to a case of transmission of UCI by using a PUSCH (UCI on PUSCH). The PUSCH may be scheduled by DCI or may be configured grant PUSCH. For a PUSCH, spatial relation information regarding the PUCCH can be interpreted as spatial relation information of a measurement reference signal (Sounding Reference Signal (SRS)).

In other words, the embodiments of the present disclosure are not limited to the PUCCH repetitions and may be applied to repetition of any other signal/channel (for example, the SRS).

The HARQ-ACK in the present disclosure may be interpreted as any UCI. In this case, the PUCCH resource may be configured by RRC signaling. For example, the UE may use, as a PUCCH resource for CSI reporting, a resource configured by RRC.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

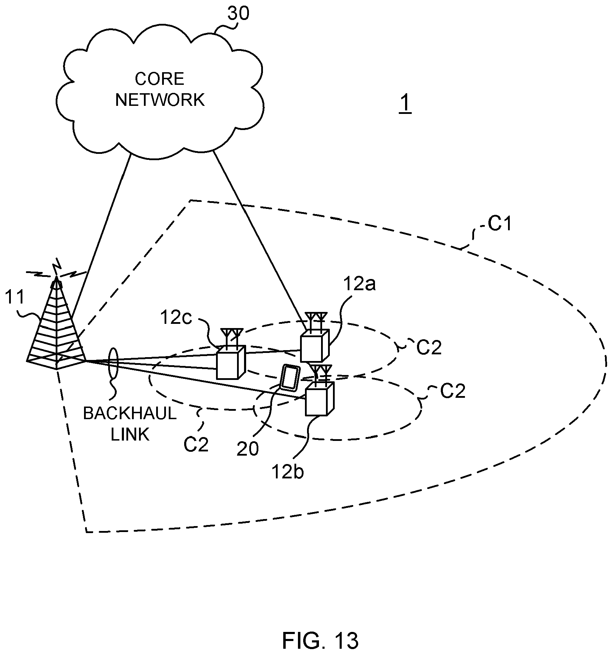

FIG. 13 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

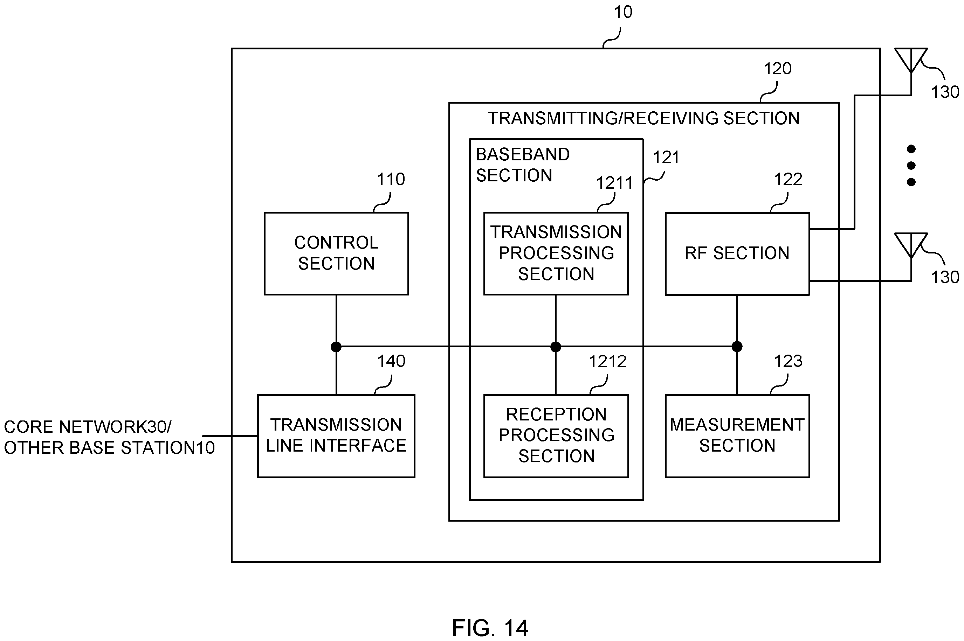

FIG. 14 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may receive, from the user terminal 20, at least one of an uplink control channel transmitted by employing first SRI and an uplink control channel transmitted by employing second SRI. The uplink control channels may be assumed to be transmitted by using an identical resource.

### (User Terminal)

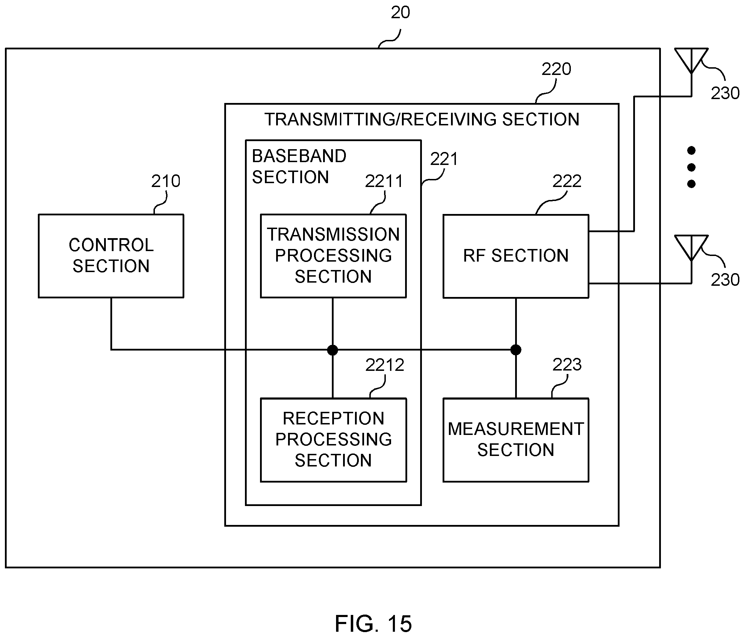

FIG. 15 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the control section 210 may determine first spatial relation information (SRI) and second SRI for transmission of an uplink control channel (for example, the PUCCH) using an identical resource. Note that third SRI, fourth SRI, ... may be further determined.

Note that the transmitting/receiving section 220 may use the identical resource to transmit the uplink control channel by employing the first SRI and to transmit the uplink control channel by employing the second SRI (in other words, may perform the PUCCH repetition).

The control section 210 may determine the first SRI and the second SRI, based on an SRI sequence including more than one SRI identifier (SSRI ID). The information of the SRI sequence may be configured for (notified to) the user terminal 20 by using higher layer signaling (for example, RRC signaling).

The control section 210 may determine the first SRI and the second SRI, based on an SRI sequence out of a plurality of SRI sequences configured, the SRI sequence being identified by using at least one of a Medium Access Control (MAC) control element and downlink control information (DCI).

The control section 210 may identify the SRI sequence, based on a given field (for example, the TPC command field) included in a specific piece of the downlink control information (for example, the first DCI or the last DCI) for scheduling a plurality of downlink shared channels (PDSCHs) corresponding to delivery confirmation information (HARQ-ACK) transmitted on the uplink control channel.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

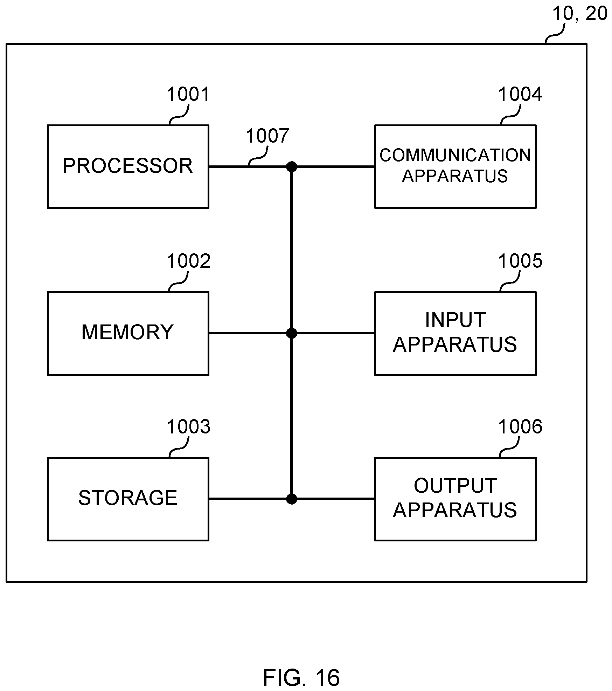

For example, a base station, a user terminal, and so on according to one embodiment of the present disclosure may function as a computer that executes the processes of the radio communication method of the present disclosure. FIG. 16 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a control section that determines first spatial relation information (SRI) and second SRI for transmission of an uplink control channel using an identical resource, and
a transmitting section that uses the identical resource to transmit the uplink control channel by applying the first SRI and to transmit the uplink control channel by applying the second SRI.

2. The user terminal according to claim 1, wherein
the control section determines the first SRI and the second SRI, based on an SRI sequence including more than one SRI identifier.

3. The user terminal according to claim 2, wherein
the control section determines the first SRI and the second SRI, based on an SRI sequence out of a plurality of SRI sequences configured, the SRI sequence being identified by using at least one of a Medium Access Control (MAC) control element and downlink control information.

4. The user terminal according to claim 3, wherein
the control section identifies the SRI sequence, based on a given field included in a specific piece of the downlink control information scheduling a plurality of downlink shared channels corresponding to delivery confirmation information transmitted on the uplink control channel.

5. A radio communication method for a user terminal, the radio communication method comprising:
determining first spatial relation information (SRI) and second SRI for transmission of an uplink control channel using an identical resource, and
using the identical resource to transmit the uplink control channel by applying the first SRI and to transmit the uplink control channel by applying the second SRI.
